# DEMANDE DE BREVET EUROPEEN

(11) **EP 2 570 940 A1**
(43) Date de publication de la demande: **20.03.2013**
(21) Numéro de dépôt: 12175263.8
(22) Date de dépôt: 06.07.2012
(51) Int. Cl.: G06F 17/30

(54) **Système de reformulation de requête de moteur de recherche**

(30) Priorité: 19.09.2011 FR 1158289
(71) Demandeur: Alcatel Lucent, 75007 Paris (FR)
(72) Inventeur: Maag, Maria Coralia Laura, 91620 Nozay (FR); Hacid, Hakim, 91620 Nozay (FR)
(74) Mandataire: Mouney, Jérôme

(57) **Abrégé**

Pour rechercher des données dans un serveur de recherche (SR) ayant reçu une première requête (Req1) qui contient un premier ensemble de mots-clés (Ens1) et qui a été transmise depuis un terminal de communication (TC) à travers un réseau de télécommunications (RT), ledit serveur fournit une liste de réponses, invite l'utilisateur à attribuer un score à au moins une réponse, détermine un deuxième ensemble de mots-clés (Ens2) à partir du premier ensemble de mots-clés (Ens1), les mots-clés du deuxième ensemble (Ens2) étant déduits d'une analyse sémantique des réponses auxquelles un score est attribué, et produit une deuxième requête (Req2) contenant le deuxième ensemble de mots-clés.

## Description

La présente invention concerne un système pour une reformulation de requêtes effectuées dans un moteur de recherche dans un réseau de télécommunications.

Un système de recherche, appelé plus communément moteur de recherche, est une combinaison de matériel informatique et de logiciel permettant de retrouver des ressources telles que des pages web, des images ou des séquences vidéo, associées à des mots quelconques.

Un moteur de recherche dit "généraliste" fournit immédiatement une réponse de données à une requête comprenant par exemple des mots-clés, si une réponse existe dans des bases de données explorées par le moteur. Par exemple, un moteur de recherche généraliste comprend des agents qui parcourent périodiquement et automatiquement des sites web pour actualiser des adresses de sites et découvrir de nouvelles adresses de sites web. Toutes les pages web de tous les sites disponibles sont alors identifiées, en fonction notamment des liens hypertextes des pages web, afin d'indexer les pages web dans une base de données accessible à des utilisateurs par des mots-clés.

Actuellement, une difficulté liée aux systèmes de récupération d'information ou moteurs de recherche est généralement la formulation de requêtes par des utilisateurs. En effet, la formulation d'une requête est problématique notamment lorsque l'utilisateur ne maîtrise pas ou ne connaît pas l'outil de recherche. Cette difficulté est liée principalement à deux aspects : (i) l'utilisateur ne connaît pas ce qu'il recherche jusqu'à ce qu'il le trouve, ainsi il ne sait pas comment formuler la bonne requête, et (ii) l'utilisateur ignore la stratégie d'indexation des documents utilisée par la base de données du système de récupération d'information, ainsi il ne sait pas non plus comment formuler la bonne requête pour obtenir le meilleur résultat pertinent.

Il existe ainsi un besoin d'améliorer la formulation de requête dans un outil informatique géré par un moteur de recherche afin que ce dernier obtienne le plus d'informations possible tout en gardant l'utilisation de l'outil informatique la plus simple possible pour l'utilisateur.

Pour remédier aux inconvénients précédents, un procédé pour rechercher des données dans un serveur de recherche ayant reçu une première requête qui contient un premier ensemble de mots-clés et qui a été transmise depuis un terminal de communication à travers un réseau de télécommunications, comprend les étapes suivantes dans le serveur de recherche:
fournir une liste de réponses,
inviter l'utilisateur à attribuer un score à au moins une réponse,
déterminer un deuxième ensemble de mots-clés à partir du premier ensemble de mots-clés, des mots-clés du deuxième ensemble étant déduits d'une analyse sémantique des réponses auxquelles un score est attribué,
produire une deuxième requête contenant le deuxième ensemble de mots-clés.

Avantageusement, l'invention combine les actions de l'utilisateur et une analyse sémantique du contenu du résultat de la recherche pour reformuler des requêtes plus efficaces qui sont vouées à obtenir de meilleurs résultats. Ce processus est interactif en ce qu'il prend en compte des informations fournies par l'utilisateur à tout moment et traite ces informations pour générer de nouvelles requêtes plus explicites traduisant les attentes de l'utilisateur. Le moteur de recherche tente ainsi de comprendre ce que recherche réellement l'utilisateur.

En d'autres termes, le moteur de recherche exploite les opérations implicites que l'utilisateur effectue généralement lorsqu'il navigue à travers les résultats de recherche.

Selon une autre caractéristique de l'invention, la liste de réponses peut contenir au moins deux réponses considérées opposées qui sont de types différents ou qui sont relatives à au moins un mot-clé du premier ensemble qui possède des significations différentes, et selon lequel l'utilisateur est invité à attribuer un score à au moins deux réponses considérées opposées.

Selon une autre caractéristique de l'invention, un poids peut être attribué à chacun des mots-clés du deuxième ensemble suite à l'analyse sémantique des réponses.

Selon une autre caractéristique de l'invention, le poids attribué à un mot-clé peut être en outre ajusté en fonction du score attribué par l'utilisateur à la réponse ou les réponses à partir desquelles le mot-clé est déterminé.

Selon une autre caractéristique de l'invention, une réponse peut être sous la forme d'une zone textuelle comprenant un hyperlien ciblant une adresse internet contenant un document et comprenant en outre une description brève du document, et selon lequel si l'utilisateur attribue un score à une réponse en ayant accédé au document, une analyse sémantique est effectuée sur le document, et si l'utilisateur attribue un score à une réponse sans accéder au document, une analyse sémantique est effectuée sur la description brève du document.

Selon une autre caractéristique de l'invention, une liste de réponses à la deuxième requête est fournie, les réponses étant filtrées en fonction d'une analyse de propriétés des réponses à la première requête.

L'invention concerne également un serveur pour rechercher des données, ledit serveur ayant reçu une première requête qui contient un premier ensemble de mots-clés et qui a été transmise depuis un terminal de communication à travers un réseau de télécommunications, ledit serveur comprenant :
des moyens pour fournir une liste de réponses,
des moyens pour inviter l'utilisateur à attribuer un score à au moins une réponse,
des moyens pour déterminer un deuxième ensemble de mots-clés à partir du premier ensemble de mots-clés, les mots-clés du deuxième ensemble étant déduits d'une analyse sémantique des réponses auxquelles un score est attribué,
des moyens pour produire une deuxième requête contenant le deuxième ensemble de mots-clés:

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention,
- la figure 2 est un algorithme d'un procédé d'analyse de requête d'un utilisateur dans un moteur de recherche selon une réalisation de l'invention.

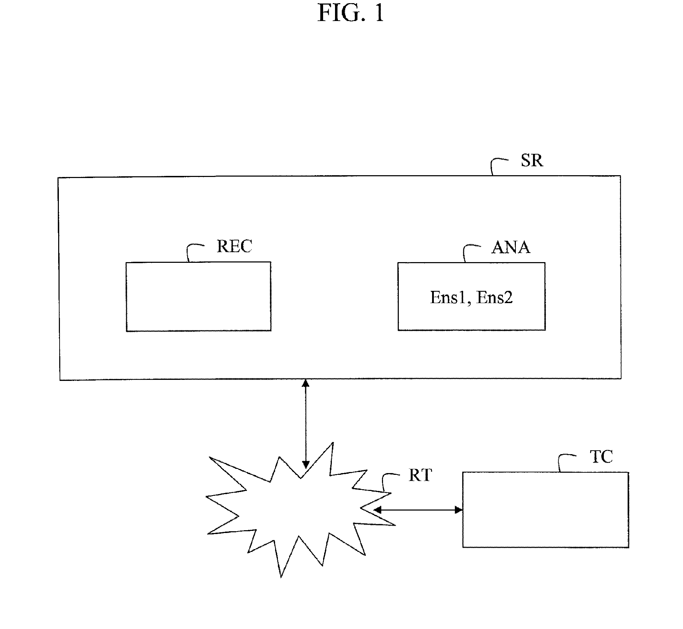

En référence à la figure 1, un système de communication comprend un serveur de recherche SR et un terminal de communication TC, aptes à communiquer entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

Selon un autre exemple, le réseau de télécommunications RT est un réseau de type TDM ("Time Division Multiplexing" en anglais) ou encore un réseau privé spécifique à une société supportant un protocole propriétaire.

Un terminal de communication TC d'un utilisateur est relié au serveur de recherche SR à travers le réseau de télécommunications RT.

Selon un exemple, un terminal de communication est un ordinateur personnel relié directement par modem à une liaison de type xDSL ("Digital Subscriber Line" en anglais) ou RNIS (Réseau Numérique à Intégration de Services) reliée au réseau de télécommunications RT.

Selon un autre exemple, un terminal de communication est un terminal de radiocommunications cellulaire mobile, relié par un canal de radiocommunication au réseau de télécommunications, par exemple de type GSM ("Global System for Mobile communications" en anglais) ou UMTS ("Universal Mobile Telecommunications System" en anglais).

Selon un autre exemple, un terminal de communication comprend un dispositif ou objet électronique de télécommunications qui est personnel à l'utilisateur et qui peut être un assistant numérique personnel communicant PDA ("Personal Digital Assistant" en anglais), ou un téléphone intelligent (SmartPhone), pouvant être relié à une borne d'accès d'un réseau public sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais), relié au réseau de télécommunications.

Selon un autre exemple, le terminal de communication est un téléphone fixe de type TDM ou un téléphone fixe de type voix sur réseau IP. Selon un autre exemple, terminal de communication est un téléphone fixe de type POE ("Power Over Ethernet" en anglais) qui est alimenté via une connexion Ethernet.

Le serveur de recherche SR est un serveur fournissant un service de recherche à base de mots-clés et a le rôle d'un moteur de recherche.

Le serveur de recherche SR comprend un module de recherche REC et un module d'analyse ANA.

A titre d'exemple de fonctionnement du moteur de recherche, lorsqu'un utilisateur lance une recherche, une requête est transmise au serveur de recherche SR. Le module de recherche REC génère éventuellement des requêtes modifiées et les transmet à des serveurs de base de données selon la répartition des données dans les bases de données. Le serveur de recherche exécute un algorithme prédéterminé pour répartir la recherche en fonction de mots-clés compris dans la requête de l'utilisateur et en fonction du contenu de chaque base de données afin de transmettre la requête et éventuellement des requêtes modifiées aux serveurs de base susceptibles de fournir des réponses. Le serveur de recherche agrège ensuite les réponses obtenues et les présente à l'utilisateur.

Le serveur de recherche SR reçoit une requête de recherche depuis un terminal d'utilisateur et a le rôle d'un portail de recherche pour l'utilisateur. La recherche requise par un utilisateur peut être de tout type et est généralement exprimée sous forme d'un premier ensemble Ens1 de mots-clés contenus dans une requête de recherche. La recherche est par exemple "voiture rouge", le premier ensemble Ens1 de mots-clés comprenant alors les deux mots-clés "voiture" et "rouge". Le module de recherche REC peut alors décomposer la recherche en plusieurs expressions de recherche en fonction du contenu de la requête. Par exemple, la requête peut être décomposée en trois expressions "voiture", "rouge" et "voiture rouge".

Plus particulièrement, le module de recherche REC fournit une liste de réponses suite à une requête contenant un premier ensemble Ens1 de mots-clés et transmise depuis le terminal de communication TC.

Le module d'analyse ANA coopère avec une interface graphique qui est par exemple un "plug-in" ou une barre d'outils intégré à un navigateur web, permettant à l'utilisateur d'attribuer un score à au moins une partie des réponses fournies par le module de recherche REC.

Le module d'analyse ANA effectue une analyse sémantique des réponses et des documents associés aux réponses obtenues par le module de recherche REC et auxquels un score est attribué par l'utilisateur. Notamment, le module d'analyse ANA détermine les termes ou les mots-clés les plus pertinents dans les documents associés aux réponses.

Par exemple, l'analyse sémantique est basée sur une analyse de type TF-IDF ("Term Frequency-Inverse Document Frequency" en anglais) qui établit une mesure statistique permettant d'évaluer l'importance d'un mot-clé contenu dans un document donné relativement à un corpus qui regroupe un ensemble de documents. Dans ce cas, un poids associé au mot-clé augmente proportionnellement au nombre d'occurrences du mot-clé dans le document donné et varie également en fonction de la fréquence du mot-clé dans le corpus.

Il est considéré qu'une réponse est sous la forme d'une zone textuelle comprenant un hyperlien ciblant une adresse internet contenant un document et comprenant en outre une description brève par exemple en quelques mots ou quelques lignes du document. Il est considéré en outre que le terme document désigne le contenu ou l'information hébergé à une adresse internet.

Par exemple, si l'utilisateur attribue un score à une réponse sans cliquer sur l'hyperlien pour accéder au document, le module d'analyse ANA effectue une analyse sémantique seulement sur la réponse elle-même, c'est-à-dire sur la description brève du document. Si l'utilisateur attribue un score à une réponse en cliquant sur l'hyperlien pour accéder au document, le module d'analyse ANA effectue une analyse sémantique sur le document.

Il est considéré qu'un score attribué par l'utilisateur à une réponse représente la pertinence de la réponse pour l'utilisateur. L'utilisateur peut ainsi attribuer un score à une réponse en accédant au document associé à la réponse ou simplement en lisant la réponse. Un score peut être transcrit sous différentes formes, telles qu'une note sur une échelle graduée ou une image de type "smiley" ou encore une forme colorée. Il est en outre considéré que plus le score est élevé, plus la réponse est pertinente pour l'utilisateur.

En fonction de l'analyse sémantique des réponses et des documents associés, le module d'analyse ANA produit un deuxième ensemble Ens2 de mots-clés. Pour une meilleure efficacité, le module d'analyse ANA effectue une analyse sémantique des réponses ayant les scores les plus élevés et les plus bas, afin de déterminer des mots-clés relatifs aux réponses les plus pertinentes et les moins pertinentes. Le deuxième ensemble Ens2 de mots-clés est déduit du premier ensemble Ens1 de mots-clés en ajoutant des mots-clés issus de l'analyse sémantique des documents les plus pertinents et/ou en supprimant des mots-clés issus de l'analyse sémantique des documents les moins pertinents. Par exemple, un mot-clé peut être ajouté au premier ensemble Ens1 suite à une analyse de type TF-IDF sur un document auquel un score élevé est attribué, et un mot-clé peut être supprimé du premier ensemble Ens1 suite à une analyse de type TF-IDF sur un document auquel un score faible est attribué. En outre, un mot-clé contenu dans le premier ensemble Ens1 peut être supprimé s'il apparaît dans chacun des documents sur lesquels l'analyse de type TF-IDF est effectuée et qu'il n'a pas de caractère discriminant pour l'un des documents.

Il est possible que le deuxième ensemble Ens2 de mots-clés ne contienne aucun mot-clé en commun avec le premier ensemble Ens1 de mots-clés.

Le module d'analyse ANA attribue un poids à chacun des mots-clés du deuxième ensemble Ens2 suite à l'analyse sémantique des réponses. Par exemple, le poids est déterminé à l'aide d'une analyse de type TF-IDF.

Optionnellement, le module d'analyse ANA effectue en outre une analyse des propriétés des réponses et des documents associés aux réponses obtenues par le module de recherche REC et également auxquels un score est attribué par l'utilisateur. Le module d'analyse ANA identifie par exemple le type de réponse qui peut être un indice sur ce que recherche l'utilisateur. Par exemple, le module d'analyse identifie la nature du document, qui peut être un site web classique, un forum, un blog, ou encore un fichier dans un format donné, et également le genre de service proposé par le site web.

Optionnellement, le module d'analyse ANA est apte à fournir une liste de réponses qui sont de types différents et/ou qui sont relatives à au moins un mot-clé du premier ensemble Ens1 qui possède des significations différentes. Par exemple, si la requête contient le mot-clé "Java", la liste peut comprendre des réponses telles qu'un site d'information touristique sur l'île de Java, un forum ayant pour sujet "Java" au sens du langage de programmation, un blog ayant pour sujet "Java" au sens de l'île de Java, ou encore un article au format "pdf" relatif à "Java" au sens du langage de programmation. Le module d'analyse ANA effectue ainsi une sorte de filtre sur la liste des résultats ayant pour but d'orienter la recherche de l'utilisateur et d'éliminer différents types de résultats.

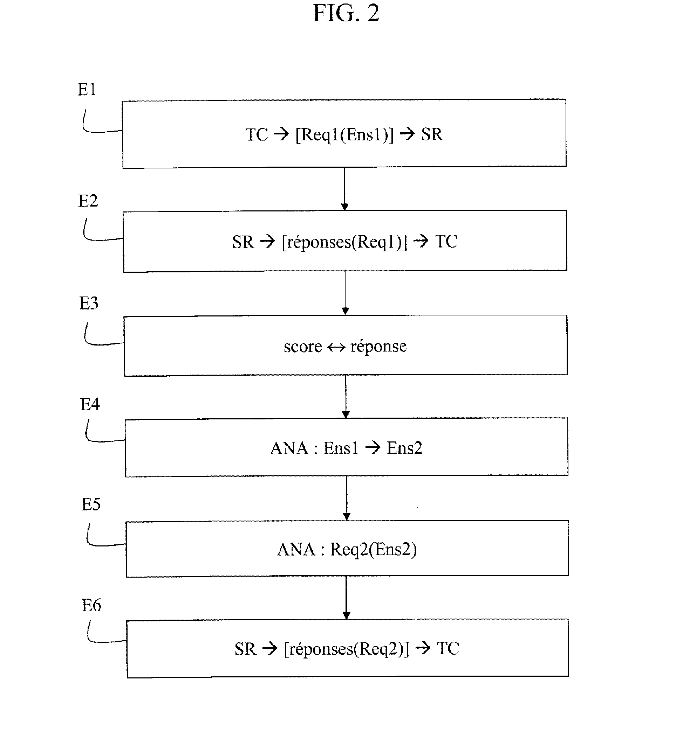

En référence à la figure 2, un procédé reformulation de requêtes effectuées dans un moteur de recherche selon une réalisation de l'invention comprend des étapes E1 à E6 exécutées dans le système de communication.

A l'étape E1, l'utilisateur se connecte à un serveur de recherche SR via un terminal de communication TC afin d'effectuer une recherche à base de mots-clés saisis par l'utilisateur. Une première requête Req1 contenant un premier ensemble Ens1 de mots-clés est transmise depuis le terminal de communication TC au serveur de recherche SR.

A l'étape E2, le module de recherche REC fournit une liste de réponses à la première requête Req1. Optionnellement les réponses sont de types différents et/ou sont relatives à au moins un mot-clé du premier ensemble Ens1 qui possède des significations différentes.

La liste de réponses est transmise au terminal de communication TC depuis le serveur de recherche SR et présentée à l'utilisateur.

A l'étape E3, le module de recherche REC invite l'utilisateur à attribuer un score à au moins l'une des réponses qui lui sont présentées.

A l'étape E4, le module d'analyse ANA effectue une analyse sémantique des réponses et des documents associés aux réponses obtenues par le module de recherche REC et auxquels un score est attribué par l'utilisateur.

Le module d'analyse ANA détermine un deuxième ensemble Ens2 de mots-clés qui est déduit du premier ensemble Ens1 de mots-clés en y ajoutant des mots-clés issus de l'analyse sémantique des documents les plus pertinents et/ou en y supprimant des mots-clés issus de l'analyse sémantique des documents les moins pertinents.

Optionnellement, le module d'analyse ANA effectue en outre une analyse des propriétés des réponses et des documents associés aux réponses auxquels un score est attribué afin d'identifier le type des réponses. Ainsi, le module d'analyse ANA identifie comme type de réponses souhaitées par l'utilisateur les réponses auxquelles un score élevé est attribué, les autres types de réponses étant écartés.

Optionnellement, le module d'analyse ANA attribue un poids à chacun des mots-clés du deuxième ensemble Ens2 suite à l'analyse sémantique des réponses. Le poids attribué à un mot-clé peut être en outre ajusté en fonction du score attribué par l'utilisateur à la réponse ou les réponses à partir desquelles le mot-clé est déterminé.

A l'étape E5, le module d'analyse ANA produit une deuxième requête Req2 contenant le deuxième ensemble Ens2 de mots-clés auxquels sont optionnellement attribués des poids respectifs. Selon une réalisation, le deuxième ensemble Ens2 conserve seulement un nombre donné de mots-clés auxquels les poids les plus élevés sont attribués dans le cas où le moteur de recherche ne prend pas en compte les poids et ces mots-clés sont éventuellement classés dans l'ordre de poids décroissant dans le cas où le moteur de recherche prend en compte l'ordre des mots-clés.

Selon une réalisation, chacun des mots-clés proposés dans le deuxième ensemble Ens2 peut être validé par l'utilisateur.

A l'étape E6, le module de recherche fournit une liste de réponses à la deuxième requête Req2.

Optionnellement les réponses sont filtrées en fonction de l'analyse de propriétés des documents effectuée sur les réponses à la première requête, certains types de réponses ayant été écartés.

L'invention décrite ici concerne un procédé et un serveur pour une reformulation de requêtes effectuées dans un moteur de recherche. Selon une implémentation de l'invention, les étapes du procédé de l'invention sont déterminées par les instructions d'un programme d'ordinateur incorporé dans un serveur, tel que le serveur SR. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour rechercher des données dans un serveur de recherche (SR) ayant reçu une première requête (Req1) qui contient un premier ensemble de mots-clés (Ens1) et qui a été transmise depuis un terminal de communication (TC) à travers un réseau de télécommunications (RT), le procédé comprenant les étapes suivantes dans le serveur de recherche (SR):
fournir (E2) une liste de réponses, la liste de réponses contient au moins deux réponses considérées opposées qui sont de types différents ou qui sont relatives à au moins un mot-clé du premier ensemble (Ens1) qui possède des significations différentes,
inviter (E3) l'utilisateur à attribuer un score à au moins deux réponses considérées opposées,
déterminer (E4) un deuxième ensemble de mots-clés (Ens2) à partir du premier ensemble de mots-clés (Ens1), des mots-clés du deuxième ensemble (Ens2) étant déduits d'une analyse sémantique des réponses auxquelles un score est attribué,
produire (E5) une deuxième requête (Req2) contenant le deuxième ensemble de mots-clés (Ens2).

2. Procédé conforme à la revendication 1, selon lequel le deuxième ensemble (Ens2) est déterminé à partir du premier ensemble (Ens1) en supprimant des mots-clés du premier ensemble (Ens1) et/ou en ajoutant des mots-clés au premier ensemble (Ens1).

3. Procédé conforme à la revendication 1 ou 2, selon lequel un poids est attribué à chacun des mots-clés du deuxième ensemble (Ens2) suite à l'analyse sémantique des réponses.

4. Procédé conforme à la revendication 3, selon lequel le poids attribué à un mot-clé est en outre ajusté en fonction du score attribué par l'utilisateur à la réponse ou les réponses à partir desquelles le mot-clé est déterminé.

5. Procédé conforme à l'une des revendications 1 à 4, selon lequel une réponse est sous la forme d'une zone textuelle comprenant un hyperlien ciblant une adresse internet contenant un document et comprenant en outre une description brève du document, et selon lequel si l'utilisateur attribue un score à une réponse en ayant accédé au document, une analyse sémantique est effectuée sur le document, et si l'utilisateur attribue un score à une réponse sans accéder au document, une analyse sémantique est effectuée sur la description brève du document.

6. Procédé conforme à l'une des revendications 1 à 5, selon lequel est fournie une liste de réponses à la deuxième requête (Req2), les réponses étant filtrées en fonction d'une analyse de propriétés des réponses à la première requête (Req1).

7. Serveur (SR) pour rechercher des données, ledit serveur ayant reçu une première requête (Req1) qui contient un premier ensemble de mots-clés (Ens1) et qui a été transmise depuis un terminal de communication (TC) à travers un réseau de télécommunications (RT), ledit serveur comprenant :
des moyens (REC) pour fournir une liste de réponses, la liste de réponses contient au moins deux réponses considérées opposées qui sont de types différents ou qui sont relatives à au moins un mot-clé du premier ensemble (Ens1) qui possède des significations différentes,
des moyens (REC) pour inviter l'utilisateur à attribuer un score à au moins deux réponses considérées opposées,
des moyens (ANA) pour déterminer un deuxième ensemble de mots-clés (Ens2) à partir du premier ensemble de mots-clés (Ens1), des mots-clés du deuxième ensemble (Ens2) étant déduits d'une analyse sémantique des réponses auxquelles un score est attribué,
des moyens (ANA) pour produire (E5) une deuxième requête (Req2) contenant le deuxième ensemble de mots-clés (Ens2).

8. Programme d'ordinateur apte à être mis en oeuvre dans un serveur (SR) pour rechercher des données, ledit serveur ayant reçu une première requête (Req1) qui contient un premier ensemble de mots-clés (Ens1) et qui a été transmise depuis un terminal de communication (TC) à travers un réseau de télécommunications (RT), ledit programme comprenant des instructions qui, lorsque le programme est chargé et exécuté dans ledit serveur (SR), réalisent les étapes suivantes :
fournir (E2) une liste de réponses, la liste de réponses contient au moins deux réponses considérées opposées qui sont de types différents ou qui sont relatives à au moins un mot-clé du premier ensemble (Ens1) qui possède des significations différentes,
inviter (E3) l'utilisateur à attribuer un score à au moins deux réponses considérées opposées,
déterminer (E4) un deuxième ensemble de mots-clés (Ens2) à partir du premier ensemble de mots-clés (Ens1), des mots-clés du deuxième ensemble (Ens2) étant déduits d'une analyse sémantique des réponses auxquelles un score est attribué,
produire (E5) une deuxième requête (Req2) contenant le deuxième ensemble de mots-clés (Ens2).
